# EUROPEAN PATENT APPLICATION

(11) **EP 4 465 158 A1**
(43) Date of publication of application: **20.11.2024**
(21) Application number: 23792000.4
(22) Date of filing: 22.02.2023
(51) Int. Cl.: G06F 3/0484, G06F 3/041, G06F 3/04886, H04M 1/02

(54) **ELECTRONIC DEVICE AND METHOD FOR DISPLAYING TOUCH INPUT OR HOVERING INPUT ON BASIS OF CHANGE IN DISPLAY AREA OF ROLLABLE DISPLAY**

(30) Priority: 19.04.2022 KR 20220048215; 30.05.2022 KR 20220066403
(71) Applicant: Samsung Electronics Co., Ltd, Suwon-si, Gyeonggi-do 16677 (KR)
(72) Inventor: PARK, Hanseok, Suwon-si, Gyeonggi-do 16677 (KR)
(74) Representative: HGF
(86) International application number: PCT/KR2023/002559
(87) International publication number: WO 2023/204418

(57) **Abstract**

An electronic device according to an embodiment comprises: a housing; a memory configured to store instructions; a display that is insertable into the housing or withdrawable from the housing; and at least one processor. The at least one processor may be configured to, when the instructions are executed, identify a touch input on a display area of the display exposed outside the housing and, if the display area changes while the touch input is being maintained on the display area, display an object corresponding to the point of contact of the touch input on the basis of the size of the change in the display area.

## Description

### [Technical Field]

The following descriptions relate to an electronic device and method for displaying a touch input or a hovering input based on a change in a display region of a rollable display.

### [Background Art]

As the development of a flexible display progresses, the development of an electronic device including a rollable display through the flexible display is progressing. The electronic device including the rollable display may change a display region of a display by inserting or extracting a part of the display into or from a housing. The display region of the rollable display may be manually changed through a hinge or a spring, or may be automatically changed through a motor.

### [Disclosure]

### [Technical Problem]

Embodiments of the present disclosure continue to display a contact point of a touch input or an input point of a hovering input on a display even when the display region of the display changes. Therefore, a device configured to touch or hover a display region that matches a user's intention is provided.

Technical tasks to be achieved in the present disclosure are not limited to the technical tasks mentioned above, and other technical tasks not mentioned will be clearly understood by those having ordinary knowledge in the art to which the present disclosure belongs from the description below.

### [Technical Solution]

An electronic device according to an embodiment may comprise a housing, memory configured to store instructions, a display insertable into the housing or extractable from the housing, and at least one processor, wherein the at least one processor, when the instructions are executed, may be configured to identify a touch input on a display region of the display exposed outside the housing, and in case that the display region changes while the touch input is maintained on the display region, display an object corresponding to a contact point of the touch input based on a size of the changed display region.

An electronic device according to an embodiment may comprise a housing, memory configured to store instructions, a display insertable into the housing or extractable from the housing, and at least one processor, wherein the at least one processor, when the instructions are executed, may be configured to identify a hovering input on a display region of the display exposed outside the housing, and in case that a size of the display region changes, display an object corresponding to a input point of the hovering input based on the size of the display region.

A method of an electronic device according to an embodiment may comprise identifying a touch input on a display region of a display exposed outside the housing, and in case that the display region changes while the touch input is maintained on the display region, displaying an object corresponding to a contact point of the touch input based on a size of the changed display region.

### [Advantageous Effects]

The device and method according to embodiments of the present disclosure may continuously maintain a user's touch input or hovering input regardless of changing the display region of the display. That is, the user may use a touch or hovering interface seamlessly even while changing the display region of the display.

In addition, the device and method according to the embodiments of the present disclosure may obtain precision of the touch input or hovering input that matches the user's intention by guiding the user to accurately touch the intended location even while changing the display region.

Effects obtainable in the present disclosure are not limited to the effects mentioned above, and other effects not mentioned will be clearly understood by those having ordinary knowledge in the art to which the present disclosure belongs from the description below.

### [Description of the Drawings]

FIG. 1 illustrates an example of a functional configuration of an electronic device in a network environment, according to embodiments.
FIG. 2 illustrates an example of a display of an electronic device, according to embodiments.
FIG. 3A illustrates an example of displaying an image on a display based on changing a display region, according to embodiments.
FIG. 3B illustrates a detailed example of maintaining a touch input based on changing a display region of a display, according to embodiments.
FIG. 3C illustrates a detailed example of maintaining a touch input based on changing a display region of a display, according to embodiments.
FIG. 3D illustrates a detailed example of maintaining a touch input based on changing a display region of a display, according to embodiments.
FIG. 4A illustrates an example of displaying an object based on a touch input, in case that a display region is enlarged, according to embodiments.
FIG. 4B illustrates an example of displaying an object based on a touch input, in case that a display region is reduced, according to embodiments.
FIG. 5 illustrates an example of removal of displaying an object based on a touch input, according to embodiments.
FIG. 6A illustrates an operation flow of an electronic device for displaying an object corresponding to a contact point of a touch input based on changing a display region of a display, according to embodiments.
FIG. 6B illustrates a detailed operation flow of an electronic device for displaying an object corresponding to a contact point of a touch input, according to an embodiment.
FIG. 7A is a diagram illustrating an example of a screen policy for changing a display region of a display, according to embodiments.
FIG. 7B is a diagram illustrating an example in which a part of a display region is maintained as an example of a screen policy for changing a display region of a display, according to embodiments.
FIG. 8A illustrates an example of displaying an object based on a hovering input, in case that a display region is enlarged, according to embodiments.
FIG. 8B illustrates an example of displaying an object based on a hovering input, in case that a display region is reduced, according to embodiments.
FIG. 9 illustrates an example of displaying an object based on a hovering input that is maintained even in a case that changing of a display region of a display is not yet completed and the hovering input is released, according to embodiments.
FIG. 10A illustrates an operation flow of an electronic device for displaying an object corresponding to an input point of a hovering input based on changing a display region of a display, according to embodiments.
FIG. 10B illustrates a detailed operation flow of an electronic device for displaying an object corresponding to an input point of a hovering input, according to embodiments.

### [Mode for Invention]

The electronic device and method according to present embodiments have an effect of providing a seamless touch input or hovering input by displaying a contact point of the touch input or an input point of the hovering input even while changing a display region of a display. In addition, the electronic device and method according to the present embodiments have an effect of providing a user with the touch input or hovering input at a point that matches the user's intention by displaying the touch input or hovering input based on changing the display region of the display.

When the region of the display increases or decreases, that is, in case that the display region of the display is changed, the identified touch input may be canceled. In addition, since the display region of the display changes rapidly, when the user touches the display while the display region of the display changes, the touch input may be detected in a part different from the user's intention.

The electronic device and method according to the present embodiments may continuously maintain the touch input or hovering input regardless of changing the display region of the display.

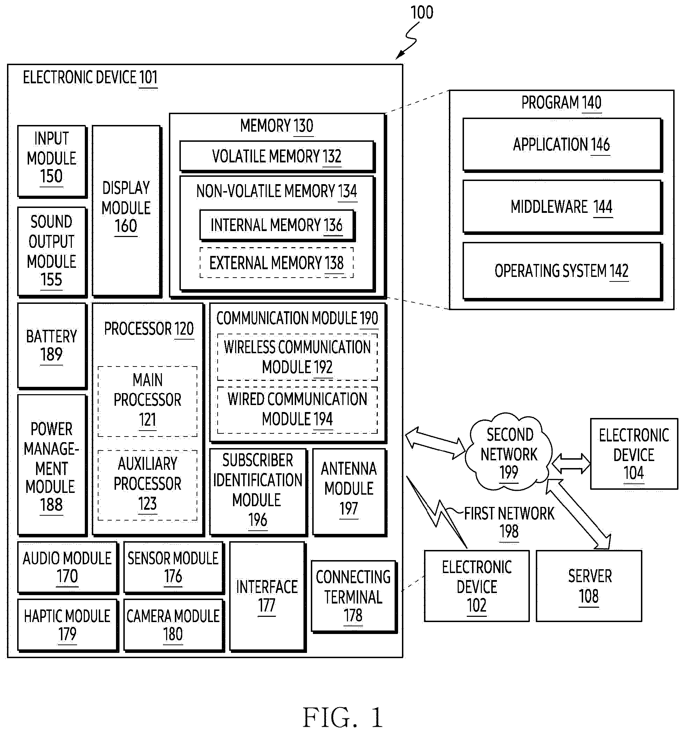

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

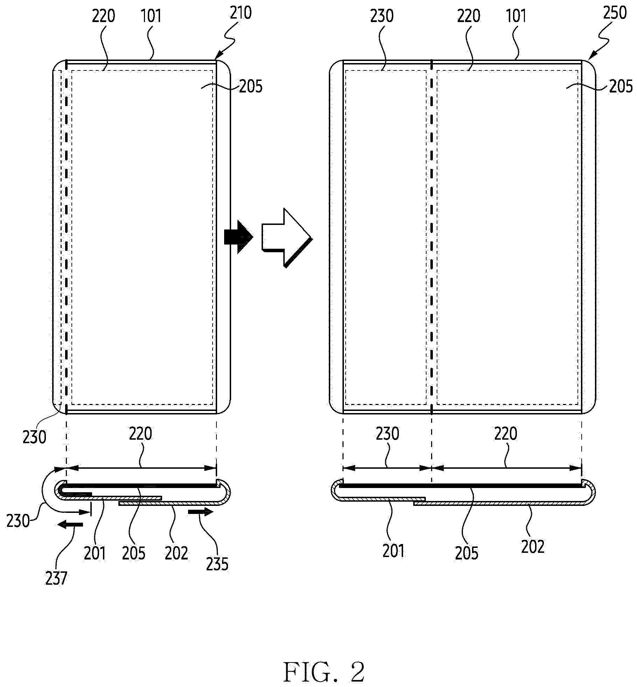

FIG. 2 illustrates an example of a display of an electronic device, according to embodiments.

Referring to FIG. 2, a display 205 (e.g., the display module 160 illustrated in FIG. 1) of an electronic device 101 may be a rollable display (or a flexible display). For example, since the display 205 is deformable, the display 205 may have a plurality of states. For example, the display 205 may be configured to be insertable into a housing of the electronic device 101 or extractable from the housing of the electronic device 101.

For example, the display 205 of the electronic device 101 may provide a first state 210 (or a reduced state) in which a part of the display 205 is exposed and another part of the display 205 is inserted into a first housing 201 among the first housing 201 and a second housing 202, as a state of the plurality of states. In an embodiment, the first state 210 may be a state that provides a viewable region having a minimum size. In an embodiment, the first state 210 may be a state in which the display 205 provides a display region exposed at the minimum size. In the first state 210, the display region exposed at the minimum size may be referred to as a first region 220. In the first state 210, a region of the display 205 inserted into the first housing 201 may be referred to as a second region 230. In the first state 210, the first region 220 may be a viewable region. In the first state 210, the first region 220 may be a region exposed outside the first housing 201. In the first state 210, the second region 230 may be a non-viewable region by inserting into the first housing 201. In the first state 210, the second region 230 may be a display region that is covered with the first housing 201 by being inserted into the first housing 201. For convenience of description, the present document describes that it is non-viewable in case that the second region 230 is inserted into the first housing 201 by assuming that the first housing 201 and the second housing 202 are formed of an opaque material, but this is only an example, and at least a partial region of the first housing 201 and/or the second housing 202 are formed of the opaque material so that at least a part of the second region 230 may be viewable through the first housing 201 even in a case that the second region 230 is inserted into the first housing 201. In this case, the second region 230 may be non-viewable when a user looks at the first region 220 from the front.

The display 205 may provide a second state 250 (or an extended state) in which the display 205 is maximally exposed, as another state among the plurality of states. The second state 250 may be a state in which the display 205 provides a viewable region having a maximum size. The second state 250 may be a state in which the display 205 provides a display region exposed at the maximum size. In the second state 250, the first region 220 and the second region 230 may be viewable regions. In the second state 250, the first region 220 and the second region 230 may be regions exposed outside the first housing 201.

Although not illustrated in FIG. 2, the display 205 may provide an intermediate state between the first state 210 and the second state 250. The intermediate state may mean a state in which a part of the first region 220 and the second region 230 are exposed, and a remaining part of the second region 230 is inserted into the first housing 201. In the intermediate state, the part of the first region 220 and the second region 230 may be a viewable region. In the intermediate state, the part of the first region 220 and the second region 230 may be a region exposed outside the first housing 201. In the intermediate state, the remaining part of the second region 230 may be a non-viewable region by inserting into the first housing 201. In the intermediate state, the remaining part of the second region 230 may be a display region covered with the first housing 201 by inserting into the first housing 201.

FIG. 2 illustrates an example in which the second housing 202 is moved or slid in a first direction 235 to switch from the first state 210 to the second state 250, but this is for convenience of description. For example, according to implementation or design of the electronic device 101, the first housing 201 may be moved or slid in a second direction 237 opposite to the first direction 235 to switch from the state 210 to the state 250.

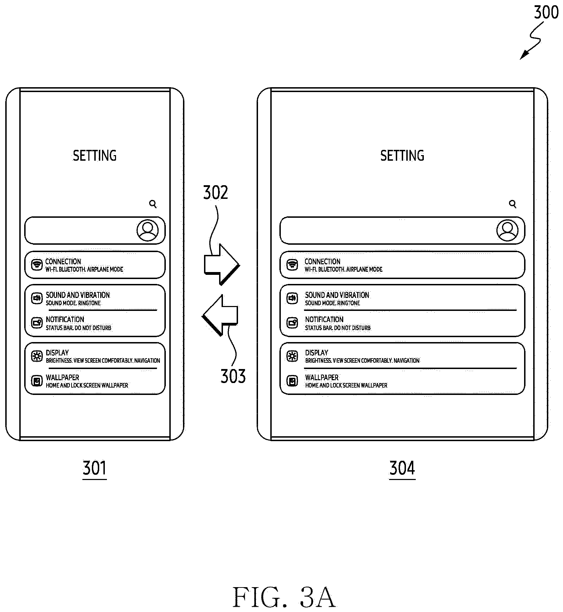

FIG. 3A illustrates an example of displaying a user interface (UI) of a display based on changing a display region of the display, according to embodiments. An electronic device may include a rollable display with a variable display region. The display region of the display means a region where a screen is displayed among parts of the display exposed outside a housing. The screen means an image, UI, video, and the like displayed on the display region of the display.

Referring to FIG. 3A, according to embodiments, a first state 301 of the electronic device means a state in which at least a part of the display is inserted into a housing. According to embodiments, a second state 304 of the electronic device means a state in which at least a part of the display is extracted from the housing. A first operation 302 is an operation in which the display region of the display is enlarged. A second operation 303 is an operation in which the display region of the display is reduced.

A state of the electronic device may be changed from the first state 301 of the electronic device to the second state 304 of the electronic device according to the first operation 302. For example, a coordinate of a point in a screen of the first state 301 of the electronic device may correspond to a coordinate of a point in a screen of the second state 304 of the electronic device. The state of the electronic device may be changed from the second state 304 of the electronic device to the first state 301 of the electronic device according to the second operation 303. The coordinate of a point in the screen of the second state 304 of the electronic device may correspond to the coordinate of a point in the screen of the first state 301 of the electronic device.

According to an embodiment, coordinate conversion between the first state 301 of the electronic device and the second state 304 of the electronic device may be performed based on a screen policy. The screen policy refers to a configuration scheme of a UI displayed on the display in accordance with changing the display region.

The electronic device may determine a UI configuration displayed on the display in the second state 304 of the electronic device based on the screen policy. For example, the electronic device may control the display to enlarge the screen in the first state 301 of the electronic device in a direction in which the display region is enlarged. For example, the electronic device may control the display to enlarge a background in a direction in which the display region is enlarged and maintain text display based on the screen policy. This is because when the screen in the first state 301 of the electronic device is enlarged in a direction in which the display region is enlarged as a whole, a problem may occur in visuality of the text. Accordingly, the processor 120 may maintain the text display. For example, the electronic device may control the display so that the display region is enlarged and the screen in the first state 301 of the electronic device is switched to a screen of another image.

The electronic device may determine the UI configuration displayed on the display in the first state 301 of the electronic device based on the screen policy. For example, the electronic device may control the display to reduce the screen in the second state 304 of the electronic device in a direction in which the display region is reduced. For example, the electronic device may control the display to reduce the background in a direction in which the display region is reduced and maintain the text display based on the screen policy. This is because when the screen in the second state 304 of the electronic device is reduced in a direction in which the display region is reduced as a whole, a problem may occur in the visuality of the text. Accordingly, the processor 120 may maintain the text display. For example, the electronic device may control the display so that the display region is reduced and the screen in the second state 304 of the electronic device is switched to a screen of another image.

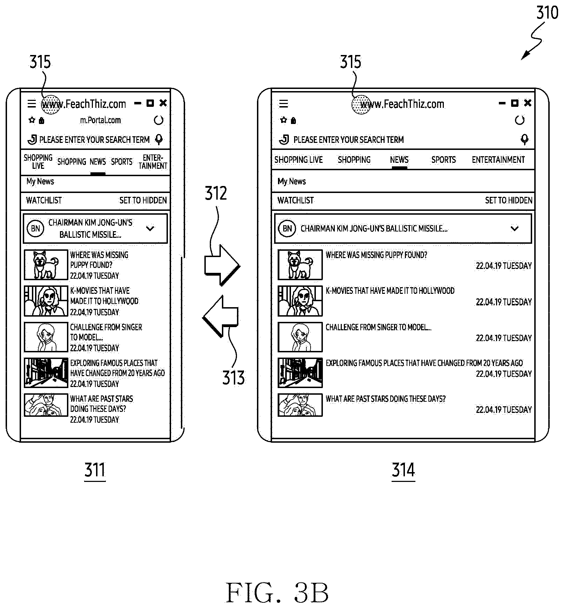

FIG. 3B illustrates a detailed example of maintaining a touch input based on changing a display region of a display, according to embodiments.

Referring to FIG. 3B, according to embodiments, a first state 311 of an electronic device means a state in which at least a part of the display is inserted into a housing. According to embodiments, a second state 314 of the electronic device means a state in which at least a part of the display is extracted from the housing. A first operation 312 is an operation in which the display region of the display is enlarged. A second operation 313 is an operation in which the display region of the display is reduced. A touch input 315 is a touch input that is maintained before and after changing the display region of the display.

A state of the electronic device may be changed from the first state 311 of the electronic device to the second state 314 of the electronic device according to the first operation 312. The state of the electronic device may be changed from the second state 314 of the electronic device to the first state 311 of the electronic device according to the second operation 313. A coordinate of a point in a screen in the second state 314 of the electronic device may correspond to a coordinate of a point in a screen in the first state 311 of the electronic device. For example, the electronic device may display a UI of an Internet browser.

The electronic device may determine a UI configuration displayed on the display in the second state 314 of the electronic device based on a screen policy. The electronic device may maintain a touch input in the first state 311 in the second state 314. For example, in case that the touch input 315 is identified in an address window of the first state 311, the touch input 315 is maintained in an address window of the second state 314.

The electronic device may determine the UI configuration displayed on the display in the first state 311 of the electronic device based on the screen policy. The electronic device may maintain a touch input in the second state 314 in the first state 311. For example, in case that the touch input 315 is identified in the address window of the second state 314, the touch input 315 is maintained in the address window of the first state 311.

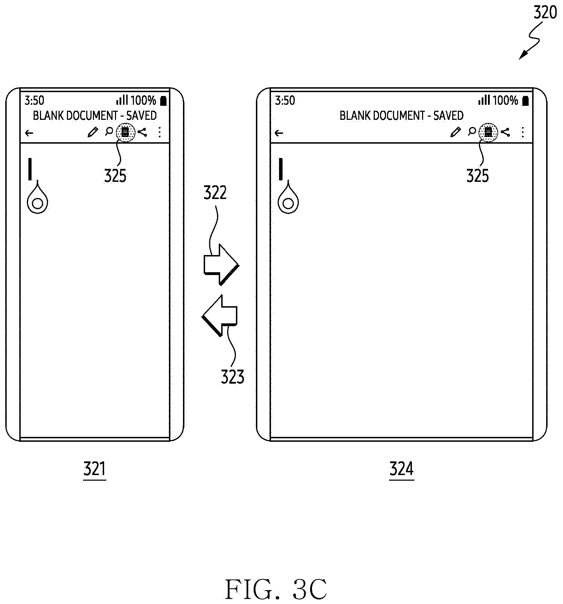

FIG. 3C illustrates a detailed example of maintaining a touch input based on changing a display region of a display, according to embodiments.

Referring to FIG. 3C, according to embodiments, a first state 321 of an electronic device means a state in which at least a part of the display is inserted into a housing. According to embodiments, a second state 324 of the electronic device means a state in which at least a part of the display is extracted from the housing. A first operation 322 is an operation in which the display region of the display is enlarged. A second operation 323 is an operation in which the display region of the display is reduced. A touch input 325 is a touch input that is maintained before and after changing the display region of the display.

A state of the electronic device may be changed from the first state 321 of the electronic device to the second state 324 of the electronic device according to the first operation 322. The state of the electronic device may be changed from the second state 324 of the electronic device to the first state 321 of the electronic device according to the second operation 323. A coordinate of a point in a screen in the second state 324 of the electronic device may correspond to a coordinate of a point in a screen in the first state 321 of the electronic device. For example, the electronic device may display a UI of an office program.

The electronic device may determine a UI configuration displayed on the display in the second state 324 of the electronic device based on a screen policy. The electronic device may maintain a touch input in the first state 321 in the second state 324. For example, in case that the touch input 325 is identified in a menu of the office program in the first state 321, the touch input 325 is maintained in the menu of the office program in the second state 324.

The electronic device may determine the UI configuration displayed on the display in the first state 321 of the electronic device based on the screen policy. The electronic device may maintain a touch input in the second state 324 in the first state 321. For example, in case that the touch input 325 is identified in the menu of the office program in the second state 324, the touch input 325 is maintained in the menu of the office program in the first state 321.

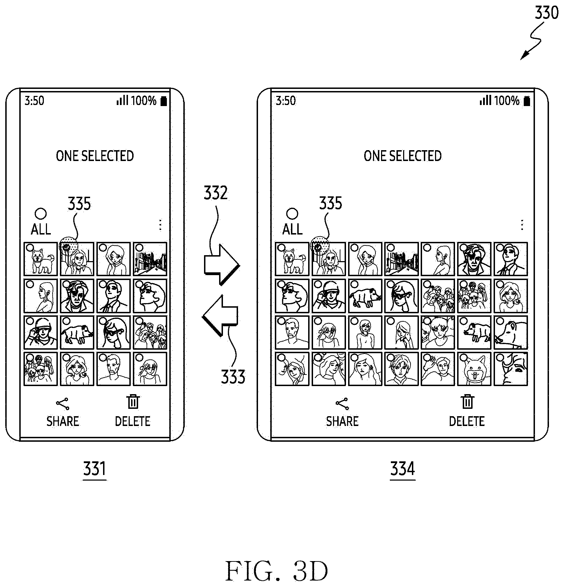

FIG. 3D illustrates a detailed example of maintaining a touch input based on changing a display region of a display, according to embodiments.

Referring to FIG. 3D, according to embodiments, a first state 331 of an electronic device means a state in which at least a part of the display is inserted into a housing. According to embodiments, a second state 334 of the electronic device means a state in which at least a part of the display is extracted from the housing. A first operation 332 is an operation in which the display region of the display is enlarged. A second operation 333 is an operation in which the display region of the display is reduced. A touch input 335 is a touch input that is maintained before and after changing the display region of the display.

A state of the electronic device may be changed from the first state 331 of the electronic device to the second state 334 of the electronic device according to the first operation 332. The state of the electronic device may be changed from the second state 334 of the electronic device to the first state 331 of the electronic device according to the second operation 333. A coordinate of a point in a screen in the second state 334 of the electronic device may correspond to a coordinate of a point in a screen in the first state 331 of the electronic device. For example, the electronic device may display images of a gallery.

The electronic device may determine a UI configuration displayed on the display in the second state 334 of the electronic device based on a screen policy. The electronic device may maintain a touch input in the first state 331 in the second state 334. For example, in case that an image of the gallery is touched in the first state 331, the touch input is maintained in the image of the gallery in the second state 324.

The electronic device may determine the UI configuration displayed on the display in the first state 321 of the electronic device based on the screen policy. The electronic device may maintain a touch input in the second state 324 in the first state 321. For example, in case that the touch input 335 is identified in the image of the gallery in the second state 334, the touch input 335 is maintained in the image of the gallery in the first state 331.

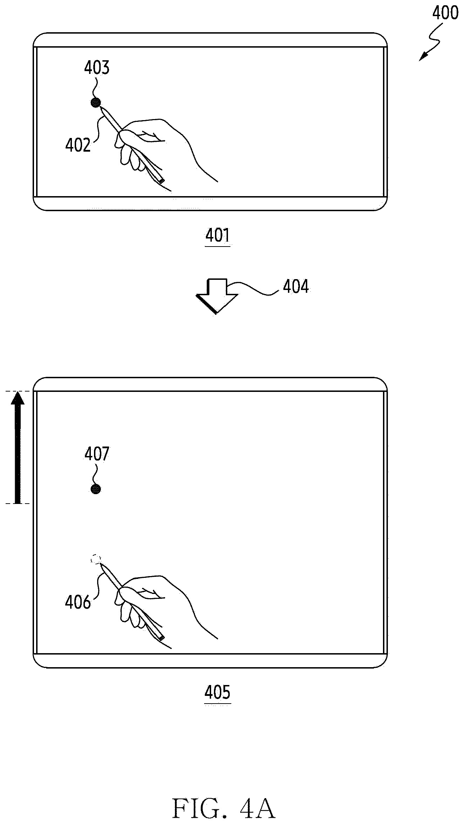

FIG. 4A illustrates an example of displaying an object based on a touch input, in case that a display region of a display is enlarged, according to embodiments.

Referring to FIG. 4A, according to embodiments, a first state 401 of an electronic device means a state in which at least a part of the display is inserted into a housing. A first input 402 refers to a touch input identified in the first state 401. A first object 403 refers to an object displayed on the display to indicate a contact point of the touch input. A second state 405 of the electronic device means a state in which at least a part of the display is extracted from the housing. A second input 406 refers to a touch input maintained in the second state 405. A second object 407 refers to an object displayed on the display to indicate the contact point of the touch input. A state of the electronic device may be changed from the first state 401 of the electronic device to the second state 405 of the electronic device according to an operation 404. The operation 404 refers to an operation in which a part of the display inserted into the housing of the electronic device is extracted out of the housing of the electronic device.

According to embodiments, in case that the first input 402 is identified before the operation 404, the processor 120 may display the first object 403. The first object 403 may be displayed at a position of the contact point of the touch input in the display region of the display in the first state 401. After the operation 404, in case that the second input 406 is maintained, the processor 120 may display the second object 407 based on a size of the display region of the display. The first input 402 in the first state 401 may be maintained while the display region of the display is enlarged.

The processor 120 may perform coordinate conversion in accordance with the operation 404. The second object 407 may be displayed at a position in accordance with a converted coordinate in the display region of the display in the second state 405.

According to an embodiment, the processor 120 may perform coordinate conversion based on a constant position ratio. For example, in the first state 401, a ratio between a total length of the display region and a length from bottom of a screen to the first object 403 may be the same, in the second state 405, as a ratio between the total length of the display region and a length from bottom of the display region to the second object 407. However, a length from the bottom of the display region to the first object 403 may be different from the length from the bottom of the display region to the second object 407. Based on the processor 120, for example, as the display region of the display is enlarged, the coordinate of the object may vary.

Although FIG. 4A illustrates an example of displaying an object based on a constant position ratio, embodiments of the present disclosure may not be limited thereto. According to an embodiment, the processor 120 may perform coordinate conversion based on a UI screen policy in accordance with enlargement of the display region, and perform object display based on the converted coordinate. In addition, according to an embodiment, the processor 120 may perform coordinate conversion based on an increasing display region size and perform object display based on the converted coordinate. According to an embodiment, the processor 120 may perform coordinate conversion based on a coordinate of an identified touch input and perform object display based on the converted coordinate.

Although a circle is illustrated as an object corresponding to a contact point of a touch input in FIG. 4A, embodiments of the present disclosure are not limited thereto. The object corresponding to the contact point of the touch input may be another planar figure or a stereoscopic figure. For example, the object may be a colored circle with a filled interior. For example, the object may be a colored polygon with a filled interior. For example, the object may be a achromatic circle with a filled interior. For example, the object may be a achromatic polygon with a filled interior. For example, the object may be a colored circle with an empty interior. For example, the object may be a colored polygon with an empty interior. For example, the object may be a achromatic circle with an empty interior. For example, the object may be a achromatic polygon with an empty interior. For example, the object may be an atypical figure with a filled interior. For example, the object may be an atypical figure with an empty interior.

In FIG. 4A, the object corresponding to the contact point of the touch input is illustrated to maintain a constant shape regardless of the enlargement of the display region of the display, embodiments of the present disclosure are not limited thereto. The shape of the object corresponding to the contact point of the touch input may change according to the enlargement of the display region of the display. For example, the object corresponding to the contact point of the touch input may be changed from a filled circle to an empty circle according to the enlargement of the display region of the display. For example, darkness of the object corresponding to the contact point of the touch input may become darker according to the enlargement of the display region of the display. For example, the darkness of the object corresponding to the contact point of the touch input may become lighter according to the enlargement of the display region of the display. For example, the at least one processor may display a movement path of the object corresponding to the contact point of the touch input on the display.

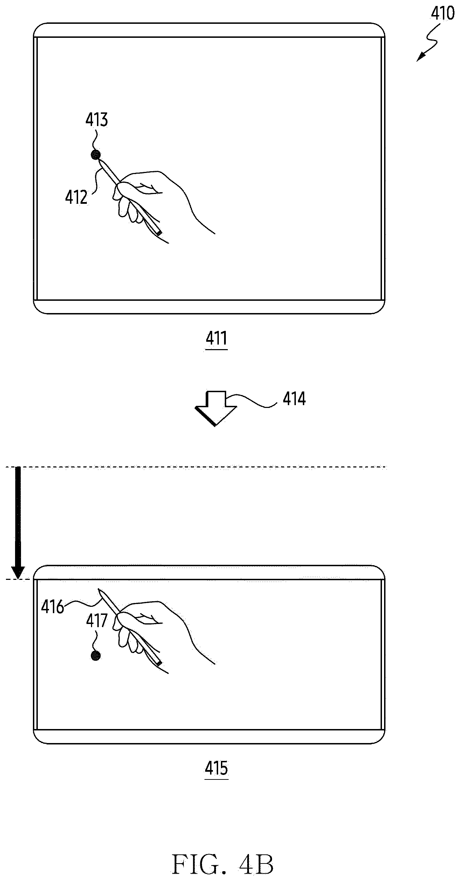

FIG. 4B illustrates an example of displaying an object based on a touch input, in case that a display region of a display is reduced, according to embodiments.

Referring to FIG. 4B, according to embodiments, a first state 411 of an electronic device means a state in which at least a part of the display is extracted from a housing. A first input 412 refers to a touch input identified in the first state 411. A first object 413 refers to an object displayed on the display to indicate a contact point of the touch input. A second state 415 of the electronic device means a state in which at least a part of the display is inserted into the housing. A second input 416 refers to a touch input maintained in the second state 415. A second object 417 refers to an object displayed on the display to indicate the contact point of the touch input. A state of the electronic device may be changed from the first state 411 of the electronic device to the second state 415 of the electronic device according to an operation 414. The operation 414 refers to an operation in which a part of the display extracted from the housing of the electronic device is inserted into the housing.

According to embodiments, in case that the first input 412 is identified before the operation 414, a processor 120 may display the first object 413. The first object 413 may be displayed at a position of the contact point of the touch input in the display region of the display in the first state 411. After the operation 414, in case that the second input 416 is maintained, the processor 120 may display the second object 417 based on a size of the display region of the display. The first input 412 in the first state 411 may be maintained while the display region of the display is reduced.

The processor 120 may perform coordinate conversion in accordance with the operation 414. The second object 417 may be displayed at a position in accordance with a converted coordinate in the display region of the display in the second state 415. According to an embodiment, the processor 120 may perform coordinate conversion based on a constant position ratio. For example, in the first state 411, a ratio between a total length of the display region and a length from bottom of the display region to the first object 413 may be the same, in the second state 415, as a ratio between the total length of the display region and a length from the bottom of the display region to the second object 417. However, the length from the bottom of the display region to the first object 413 in the first state 411 may be different from the length from the bottom of the display region to the second object 417 in the second state 415. For example, as the display region of the display is reduced, the coordinate of the object may vary.

Although FIG. 4B illustrates an example of displaying an object based on a constant position ratio, embodiments of the present disclosure may not be limited thereto. According to an embodiment, the processor 120 may perform coordinate conversion based on a UI screen policy in accordance with reduction of the display region and perform object display based on the converted coordinate. In addition, according to an embodiment, the processor 120 may perform coordinate conversion based on a reducing display region size and perform object display based on the converted coordinate. According to an embodiment, the processor 120 may perform coordinate conversion based on the coordinate of an identified touch input and perform object display based on the converted coordinate.

Referring to FIG. 4B, the processor 120 may determine a plurality of coordinates in accordance with the operation 414 corresponding to the contact point being corresponding to the first input 412 instead of a drag input. For example, in case that the first input 412 is maintained, friction may occur between a surface of the display and the contact point, according to the operation 414. The processor 120 may determine that the touch input rather than the drag input is maintained, considering a user's intention. Therefore, the processor 120 may maintain the display of the object corresponding to the contact point of the touch input.

Although a circle is illustrated as an object corresponding to the contact point of the touch input in FIG. 4B, embodiments of the present disclosure are not limited thereto. The object corresponding to the contact point of the touch input may be another planar figure or a stereoscopic figure. For example, the object may be a colored circle with a filled interior. For example, the object may be a colored polygon with a filled interior. For example, the object may be a achromatic circle with a filled interior. For example, the object may be a achromatic polygon with a filled interior. For example, the object may be a colored circle with an empty interior. For example, the object may be a colored polygon with an empty interior. For example, the object may be a achromatic circle with an empty interior. For example, the object may be a achromatic polygon with an empty interior. For example, the object may be an atypical figure with a filled interior. For example, the object may be an atypical figure with an empty interior.

In FIG. 4B, the object corresponding to the contact point of the touch input is illustrated to maintain a constant shape regardless of the reduction of the display region of the display, embodiments of the present disclosure are not limited thereto. The shape of the object corresponding to the contact point of the touch input may change according to the reduction of the display region of the display. For example, the object corresponding to the contact point of the touch input may be changed from a filled circle to an empty circle according to the enlargement of the display region of the display. For example, darkness of the object corresponding to the contact point of the touch input may become darker according to the enlargement of the display region of the display. For example, the darkness of the object corresponding to the contact point of the touch input may become lighter according to the enlargement of the display region of the display. For example, the at least one processor may display a movement path of the object corresponding to the contact point of the touch input on the display.

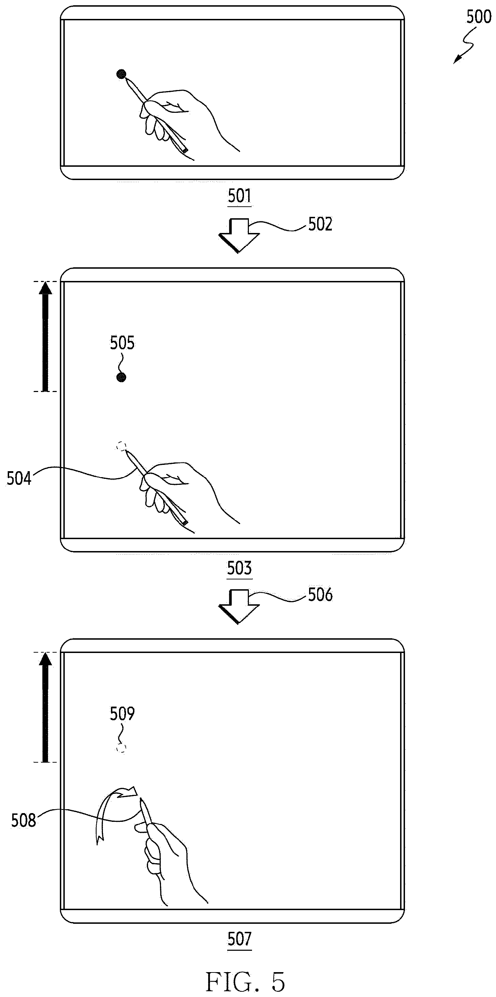

FIG. 5 illustrates an example of removal of displaying an object based on a touch input, according to embodiments.

Referring to FIG. 5, according to embodiments, a first state 501 of an electronic device means a state in which the display is at least partially inserted into a housing. A second state 503 of the electronic device means a state in which the display is at least partially extracted from the housing. A first operation 502 refers to an operation in which a part of the display inserted into the housing of the electronic device is extracted out of the housing of the electronic device. The first input 504 refers to a touch input maintained in the second state. A first object 505 refers to an object displayed on the display to indicate a contact point of the touch input. A third state 507 of the electronic device means a state in which the display is at least partially extracted from the housing. Touch release 508 means release of the maintained touch input. A second object 509 refers to an object removed based on the release of the touch input. A second operation 506 refers to an operation in which the maintained touch input is released.

A state of the electronic device may be changed from the first state 501 of the electronic device to the second state 503 of the electronic device according to the first operation 502. The state of the electronic device may be changed from the second state 503 of the electronic device to the third state 507 of the electronic device according to the second operation 506.

In case that the touch input is identified, the display region of the display is enlarged, and the touch input is released, a processor 120 may control the display not to display an object corresponding to the contact point of the touch input. For example, the state of the electronic device may be changed from the first state 501 of the electronic device to the second state 503 of the electronic device according to the first operation 502. After the first operation 502, the processor 120 may display the first object 505 when the first input 504 is maintained.

For example, the state of the electronic device may be changed from the second state 503 of the electronic device to the third state 507 of the electronic device according to the second operation 503. After the touch input release 508, the display of the object 509 corresponding to the contact point of the touch input may be removed.

For example, the processor 120 may simply remove the object. The processor 120 may remove the object after a predetermined time interval. The processor 120 may remove the object by fading the object. The processor 120 may remove the object after making the object blink. The processor 120 may remove the object after changing the color of the object.

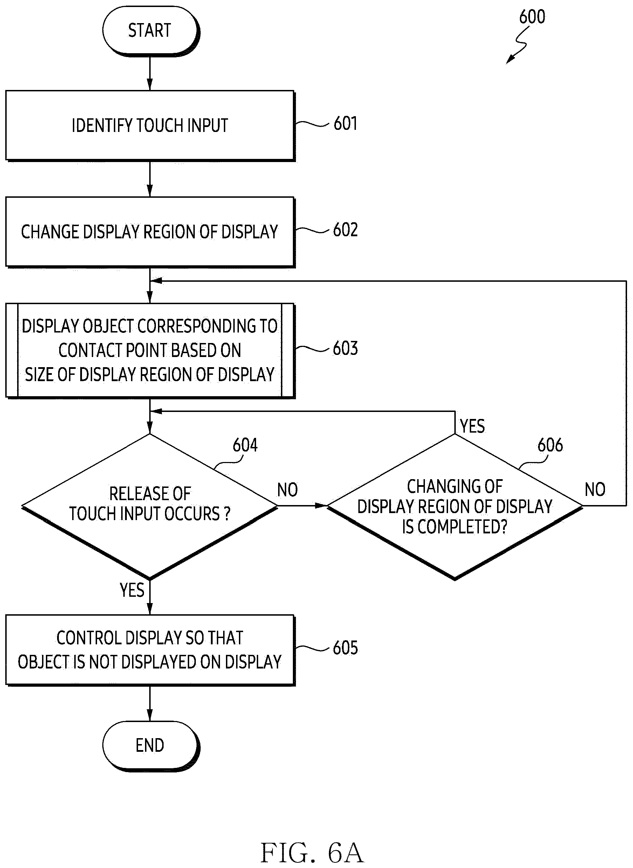

FIG. 6A illustrates an operation flow of an electronic device for displaying an object corresponding to a contact point of a touch input based on changing a display region of a display, according to embodiments. The operation of the electronic device may be performed by a processor 120 of FIG. 1.

Referring to FIG. 6A, in a first operation 601, the processor 120 may identify the touch input. The touch input may be performed as a pen is contacted on the display. Alternatively, for example, the touch input may be performed as a part of a human body (e.g., hand, finger) is contacted on the display.

In a second operation 602, the processor 120 may change the display region of the display. When the displayable region in the display increases or decreases, the processor 120 may change the display region in accordance with the displayable region.

According to an embodiment, the processor 120 may reduce the display region of the display. The processor 120 may change the display region of the display as at least a part of the display is inserted into a housing. For example, as the display is manually inserted into the housing through a hinge, the processor 120 may change the display region of the display. For example, as the display is manually inserted into the housing through a spring, the processor 120 may change the display region of the display. For example, as the display is inserted into the housing with a foldable method, the processor 120 may change the display region of the display. For example, as the display is automatically inserted into the housing through a motor, the processor 120 may change the display region of the display.

According to an embodiment, the processor 120 may increase the display region of the display. The processor 120 may change the display region of the display as the display is at least partially extracted from the housing. For example, as the display is manually extracted from the housing through the hinge, the processor 120 may change the display region of the display. For example, as the display is extracted from the housing with a foldable method, the processor 120 may change the display region of the display. For example, as the display is manually extracted from the housing through the spring, the processor 120 may change the display region of the display. For example, as the display is automatically extracted from the housing through the motor, the processor 120 may change the display region of the display.

In a third operation 603, the processor 120 may display an object corresponding to a contact point of the touch input based on a size of the display region of the display. For example, in case that the touch input is identified and the display region of the display is changed, the processor 120 may obtain first coordinate information of the contact point before changing the display region of the display. Second coordinate information corresponding to the first coordinate information may be obtained based on the size of the display region of the display. The processor 120 may display the object corresponding to the contact point in the second coordinate.

In a fourth operation 604, the processor 120 may identify whether the touch input has been released. In case that the touch input is released, the processor may perform a fifth operation 605. In case that the touch input is not released, the processor may perform a sixth operation 606.

In the fifth operation 605, the processor 120 may control the display so that the object is not displayed on the display. The processor 120 may control the display so that the object is not displayed on the display in case that the touch input is released, regardless of whether changing the display region of the display is completed.

According to embodiments, the processor 120 may control the display so that the object is not displayed on the display in response to release of the touch input. For example, in case that the touch input is released, the processor 120 may simply remove a graphic display corresponding to the contact point of the touch input. For example, in case that the touch input is released, the processor 120 may simply remove an object display corresponding to the contact point of the touch input. According to an embodiment, the processor 120 may control the display so that the object gradually disappears (e.g., fade-out) on the display in response to release of the touch input. According to an embodiment, the processor 120 may control the display so that the object disappears after changing the color of the object in response to release of the touch input. According to an embodiment, the processor 120 may control the display so that the object is not displayed after a certain period in response to release of the touch input. This is because after release of the touch input, a delay may occur until input to the displayed object. According to an embodiment, the processor 120 may control the display so that the object disappears with a sparkling effect in response to release of the touch input. In the sixth operation 606, the processor 120 may identify whether changing the display region of the display is completed. In case that changing the display region of the display is completed, the processor 120 may perform the fourth operation 604. In case that changing the display region of the display is not completed, the processor 120 may perform the third operation 603.

The processor 120 may identify whether changing the display region of the display is completed. When changing the display region of the display progresses, it is intended to display the object corresponding to the contact point of the touch input based on a size of the display region of the display.

In case that changing the display region of the display is completed, the processor 120 may perform the fourth operation 604. This is because when changing the display region of the display is completed, the processor 120 does not display the object corresponding to the contact point of the touch input based on the size of the display region of the display.

In case that changing the display region of the display is not completed, the processor 120 may perform the third operation 603. When changing the display region of the display progresses, it is intended to display the object corresponding to the contact point of the touch input based on the size of the display region of the display.

According to embodiments, in case that the touch input is maintained, the processor 120 continues to display the object corresponding to the contact point of the touch input on the display.

According to embodiments, in case that the touch input is maintained and changing the display region of the display continues, the processor 120 may continue to display the object corresponding to the contact point of the touch input based on the size of the display region of the display. For example, in case that the touch input is maintained while the display region of the display is enlarged, a position of the object corresponding to the contact point may change as the display region of the display is enlarged. A shape of the object corresponding to the contact point of the touch input may change according to the enlargement of the display region of the display. For example, the object corresponding to the contact point of the touch input may be changed from a filled circle to an empty circle according to the enlargement of the display region of the display. For example, darkness of the object corresponding to the contact point of the touch input may be become darker according to the enlargement of the display region of the display. For example, the darkness of the object corresponding to the contact point of the touch input may become lighter according to the enlargement of the display region of the display. The at least one processor may display a movement path of the object corresponding to the contact point of the touch input on the display.

According to embodiments, in case that the touch input is maintained and changing the display region of the display is completed, the object is continuously displayed.

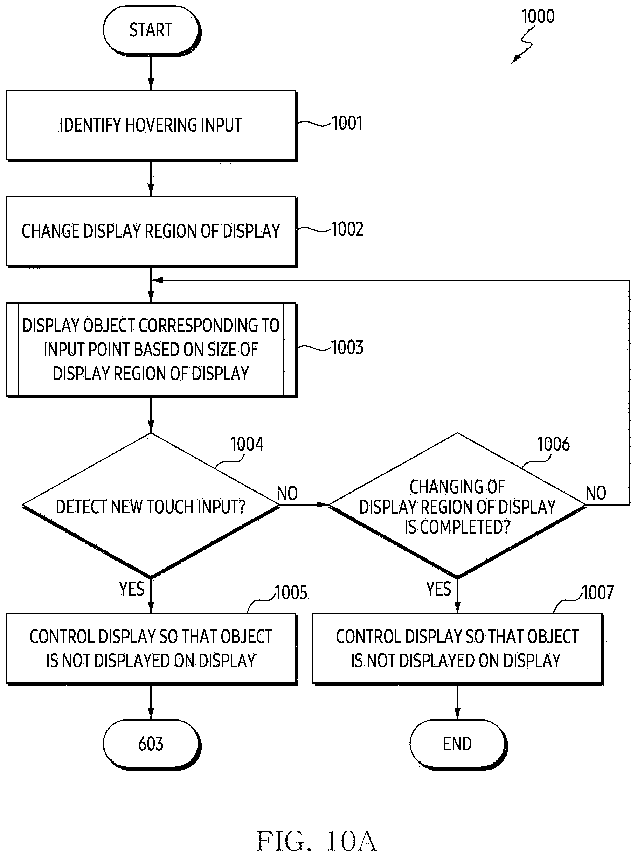

In FIG. 6A, the second operation 602 is described as being performed after the first operation 601, but embodiments of the present disclosure are not limited thereto. The first operation 601 may be performed after the second operation 602. In case that the second operation 602 of changing the display region of the display occurs before the first operation 601 of identifying the touch input, a hovering input occurs before the touch input. An operation of an electronic device of FIG. 10A with respect to the hovering input may be referred to.

In FIG. 6A, the display is illustrated to be controlled to maintain the display of the object on the display before the touch input release occurs after changing the display region of the display is completed, but embodiments of the present disclosure may not be limited thereto. After changing the display region of the display is completed, whether to display the object may be determined according to an object display policy. According to embodiments, the object display policy may be determined based on a UI of a running application. According to embodiments, the display policy may be determined based on a region of the display where the touch input is identified. For example, in accordance with the display policy, in case that a video is displayed on the display, the touch input may be maintained if the contact point of the touch input is in a menu region, and the touch input may be released if the contact point of the touch input is in another region.

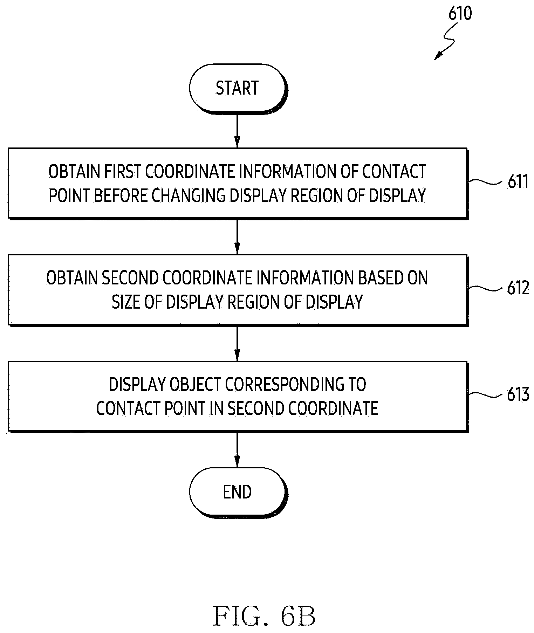

FIG. 6B illustrates an operation flow of an electronic device for displaying an object corresponding to a contact point of a touch input, according to an embodiment. In FIG. 6B, operations of an electronic device 101 for displaying the object corresponding to the contact point of the touch input are described in response to the touch input and changing the display region. The operations of FIG. 6B may correspond to a third operation 603 of the electronic device of FIG. 6A.

Referring to FIG. 6B, in a first operation 611, the processor 120 may obtain first coordinate information corresponding to the contact point of the touch input before changing the display region of the display. For example, a first coordinate in a screen of the electronic device before enlarging the display region of the display may correspond to a second coordinate in the screen of the electronic device after enlarging the display region. The first coordinate may correspond to the second coordinate based on a screen policy.

In a second operation 612, the processor 120 may obtain second coordinate information based on a size of the display region of the display. For example, the first coordinate in the screen of the electronic device before enlarging the display region of the display may correspond to the second coordinate in the screen of the electronic device after enlarging the display region of the display. The first coordinate may correspond to the second coordinate based on the screen policy.

In a third operation 613, the processor 120 may display the object corresponding to the contact point of the touch input. For example, the first coordinate in the screen of the electronic device before enlarging the display region of the display may correspond to the second coordinate in the screen of the electronic device after enlarging the display region. The first coordinate may correspond to the second coordinate based on the screen policy.

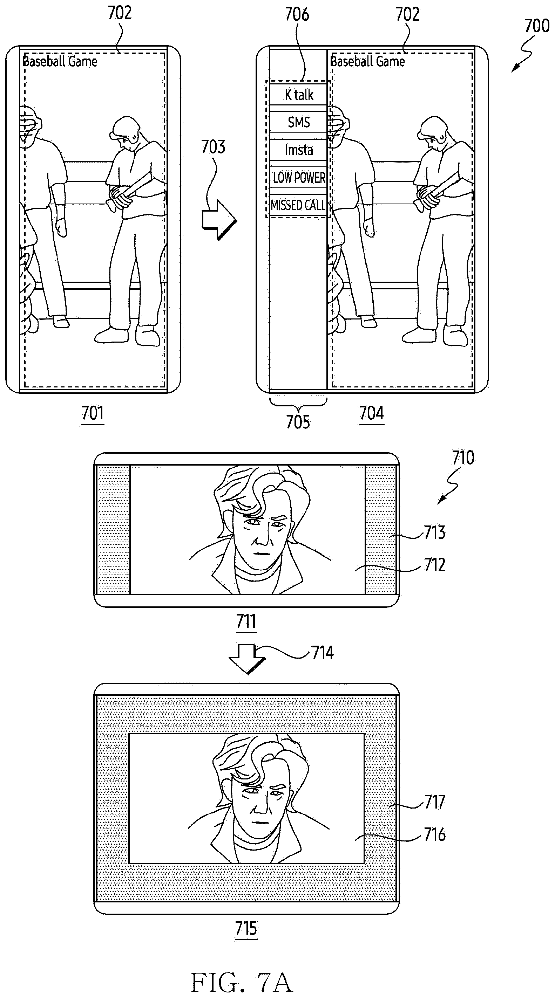

FIG. 7A is a diagram illustrating an example of a screen policy for changing a display region of a display, according to embodiments. When the display region of the display is changed, a processor 120 may display an object corresponding to a contact point of a touch input at a position in accordance with the screen policy of an application displayed in the display region. The screen policy refers to a rule indicating a configuration change of a user interface performed by the application when the display is inserted into the housing or extracted from the housing. For example, in case that the display region is enlarged in a specific situation, the screen policy may be a rule for displaying information on a notification in a first space formed according to a movement of the user interface of the display and a second space newly exposed according to the enlargement of the display region. The screen policy may be a rule of reducing or enlarging the user interface in case that the display region is changed in a specific situation. The screen policy may be a rule of switching to a new image in case that the display region is changed in a specific situation.

Referring to FIG. 7A, a first state 701 of an electronic device means a state in which at least a part of the display is inserted into the housing. A second state 704 of the electronic device means a state in which the display is at least partially extracted from the housing. According to embodiments, in the first state 701 of the electronic device, a screen of the display may be displayed. In the second state 704 of the electronic device, the processor 120 may display the screen of the display. A user interface 702 of a software application may be displayed in a part of the display region. An operation 703 may be an operation in which the display region of the display is enlarged. A part 705 of the display region may include the first space formed according to the movement of the user interface and the second space newly exposed according to the enlargement of the display region while the display region of the display is enlarged. Information 706 may mean information on notifications generated in the electronic device.

According to an embodiment, in the first state 701, the processor 120 may display the user interface 702 of the software application that provides an online game service. The processor 120 may identify extract of the display while the user interface 702 is displayed in the first state 701. The processor 120 may enlarge the display region of the display based on the extract of the display. The processor 120 may change a state of the electronic device from the first state 701 to the second state 704 based on enlargement of the display region of the display. For example, in the second state 704, the processor 120 may include information 706 on notifications generated in the electronic device, in the part 705 of the display region including the first space formed according to the movement of the user interface and the second space newly exposed according to the enlargement of the display region, while the display region of the display is enlarged. For example, the information 706 may include executable objects indicating each of the alarms. For example, in response to a user input regarding one executable object among the executable objects in information, the processor 120 may execute a software application related to the executable object. For example, the processor 120 may change the user interface to the user interface of the software application related to the executable object based on the execution of the software application related to the executable object. As described above, while the display region of the display is enlarged, the processor 120 may display information so that the user may recognize at least one notification that has not been viewed by the user among notifications generated in the electronic device.

According to an embodiment, in case that a touch input is identified at a point in the user interface 702 in the first state 701, the processor 120 may display the object corresponding to the contact point of the touch input according to the operation 703. The processor 120 may display the object corresponding to the contact point of the touch input at a point in the user interface 702 in the second state 704.

A third state 711 of the electronic device means a state in which the display is at least partially inserted into the housing. A fourth state 715 of the electronic device means a state in which the display is at least partially extracted from the housing. For example, in the third state 711 of the electronic device, the processor 120 may display the user interface of the software application in a state in which the display is inserted into the housing. In the fourth state 715 of the electronic device, the processor 120 may display the user interface of the software application. An operation 714 may be an operation in which the display region of the display is enlarged. A first region 712 of the display may be a part where a video is reproduced among the display regions of the electronic device in the third state 711. A second region 713 of the display may be a background part of the display region of the electronic device in the first state. A third region 716 of the display may be a part where a video is reproduced among the display regions of the electronic device in the first state. A fourth region 717 of the display may be a background part of the display region of the electronic device in the second state.

According to embodiments, in the third state 711, the processor 120 may display a user interface of a software application that provides a video streaming service. The processor 120 may enlarge the display region of the display while the user interface is displayed in the third state 711. The processor 120 may change the third state 711 to the fourth state 715 based on identifying enlargement 714 of the display region of the display. For example, while the display region of the display is enlarged, the processor 120 may move the user interface according to the enlargement of the display region of the display. In addition, the user interface may be displayed in a part of the display region including the first space formed according to the movement of the user interface and the second space newly exposed according to the enlargement of the display region of the display.

According to embodiments, in the third state 711, the user interface may be configured with a first region 712 and a second region 713. In the fourth state 715, the user interface may be composed of a third region 716 and a fourth region 717. For example, a size of the third region 716 may be maintained, and the fourth region 717 may be enlarged into the first space and the second space. For example, in the fourth state 715, the first space may be an upper part of the fourth region 717 in accordance with the enlargement of the display region of the display. For example, the second space may be a lower part of the fourth region in accordance with the enlargement of the display region of the display.

According to embodiments, in case that a touch input is identified at a point in the user interface in the third state 711, the processor 120 may display the object corresponding to the contact point of the touch input according to the operation 714. The processor 120 may display the object corresponding to the contact point of the touch input at a point in the user interface in the fourth state 715. For example, in case that a touch input is identified at a point of the first region 712 in the third state 711, the object corresponding to the contact point of the touch input may be displayed at a point of the third region 716 in the fourth state 715.

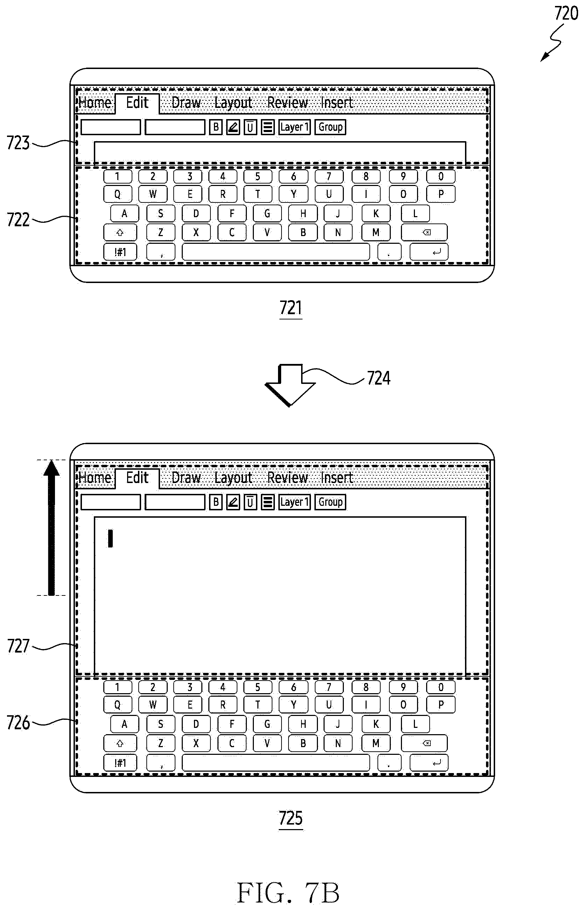

FIG. 7B is a diagram illustrating an example in which a part of a display region is maintained as an example of a screen policy for changing a display region of a display, according to embodiments.

Referring to FIG. 7B, according to embodiments, a first state 721 of an electronic device may be a state in which the display is inserted into the housing. A second state 725 of the electronic device may be a state in which the display is extracted from the housing. A user interface 722 may be a user interface for a virtual keyboard in the first state. A user interface 726 may be a user interface for a virtual keyboard in the second state. A user interface 723 may be a user interface other than the user interface for the virtual keyboard in the first state. A user interface 727 may be a user interface other than the user interface for the virtual keyboard in the second state. An operation 724 may be an operation in which the display region of the display is expanded.

According to embodiments, the processor 120 may display the user interface (UI) 722 for the virtual keyboard in the first state 721. For example, the processor 120 may identify that the user interface 722 is extracted from the housing of the display while the user interface 722 is displayed in the first state 721. The processor 120 may enlarge the display region of the display based on extract of the display. The processor 120 may change the state of the electronic device from the first state 721 to the second state 725 based on enlargement of the display region of the display. The user interface 722 in the first state 721 may correspond to the user interface 726 for the virtual keyboard in the second state. Even when the display region of the display is enlarged 724, the processor 120 may maintain a size of a region of the user interface 722 for user convenience. As the size of the display region of the display is enlarged, a part of the user interface 723 other than the user interface 722 for the virtual keyboard may be enlarged or reconfigured. In case that a touch input is identified over the region of the user interface 722, the processor 120 may display an object corresponding to a contact point of the touch input on the region of the user interface 726 after the operation 724.

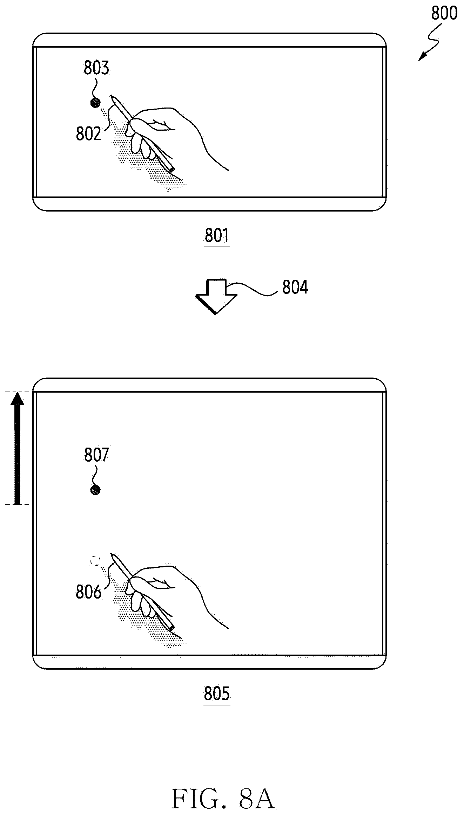

FIG. 8A illustrates an example of displaying an object based on a hovering input, in case that a display region is enlarged, according to embodiments.

Referring to FIG. 8A, according to embodiments, a first state 801 of an electronic device means a state in which at least a part of a display is inserted into a housing. A first input 802 refers to a hovering input identified in the first state. A first object 803 refers to an object that the processor 120 displays on the display to indicate an input point of the hovering input. A second state 805 of the electronic device means a state in which at least a part of the display is extracted from the housing. A second input 806 refers to a hovering input maintained in the second state 805. A second object 807 refers to an object displayed on the display to indicate the input point of the hovering input. A state of the electronic device may be changed from the first state 801 of the electronic device to the second state 805 of the electronic device according to an operation 804. The operation 804 refers to an operation in which the part of the display inserted into the housing of the electronic device is extracted out of the housing of the electronic device.

According to embodiments, before the operation 804, in case that the first input 802 is identified, the processor 120 may display the first object 803. The first object 803 may be displayed at a position of the input point of the hovering input in the display region of the display in the first state 801. After the operation 804, the processor 120 may display the second object 807 based on a size of the display region of the display. During the operation 804, whether the hovering input is maintained is independent of a display of the second object 807.

The processor 120 may perform coordinate conversion in accordance with the operation 804. The second object 807 may be displayed at a position in accordance with a converted coordinate in the display region of the display in the second state 805.

According to an embodiment, the processor 120 may perform coordinate conversion based on a constant position ratio. For example, in the first state 801, a ratio between a length of the entire screen and a length from bottom of the display region to the first object 803 may be the same, in the second state 805, as a ratio between a length of the entire screen and a length from the bottom of the display region to the second object 807. However, in the first state 801, the length from the bottom of the display region to the first object 803 may be different, in the second state 805, from the length from the bottom of the display region to the second object 807. Based on a processor 120, as the display region of the display is enlarged, for example, the coordinate of the object may vary.

Although FIG. 8A illustrates an example of displaying an object based on a constant position ratio, embodiments of the present disclosure may not be limited thereto. According to an embodiment, the processor 120 may perform coordinate conversion based on a UI screen policy in accordance with enlargement of the display region, and perform object display based on the converted coordinate. In addition, according to an embodiment, the processor 120 may perform coordinate conversion based on an increasing display region size and perform object display based on the converted coordinate. According to an embodiment, the processor 120 may perform coordinate conversion based on a coordinate of an identified touch input and perform object display based on the converted coordinate.

Although a circle is illustrated as an object corresponding to an input point of a hovering input in FIG. 8A, embodiments of the present disclosure are not limited thereto. The object corresponding to the input point of the hovering input may be another planar figure or a stereoscopic figure. For example, the object may be a colored circle with a filled interior. For example, the object may be a colored polygon with a filled interior. For example, the object may be a achromatic circle with a filled interior. For example, the object may be a achromatic polygon with a filled interior. For example, the object may be a colored circle with an empty interior. For example, the object may be a colored polygon with an empty interior. For example, the object may be a achromatic circle with an empty interior. For example, the object may be a achromatic polygon with an empty interior. For example, the object may be an atypical figure with a filled interior. For example, the object may be an atypical figure with an empty interior.

In FIG. 8A, the object corresponding to the input point of the hovering input is illustrated to maintain a certain shape regardless of the enlargement of the display region of the display, but embodiments of the present disclosure are not limited thereto. A shape of the object corresponding to the input point of the hovering input may change according to the enlargement of the display region of the display. For example, the object corresponding to the input point of the hovering input may be changed from a filled circle to an empty circle according to the enlargement of the display region of the display. For example, darkness of the object corresponding to the input point of the hovering input may become darker according to the enlargement of the display region of the display. For example, the darkness of the object corresponding to a contact point of the touch input may become lighter according to the enlargement of the display region of the display. The at least one processor may display a movement path of the object corresponding to the input point of the hovering input on the display.

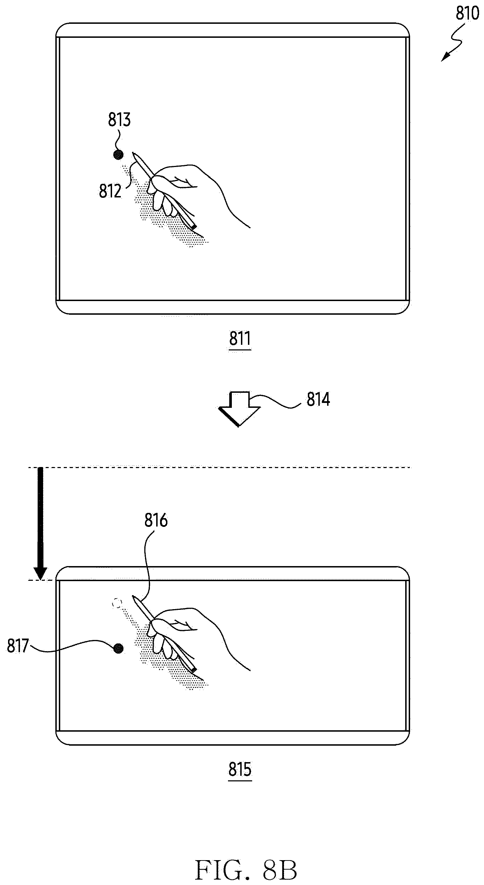

FIG. 8B illustrates an example of displaying an object based on a hovering input, in case that a display region is reduced, according to embodiments.

Referring to FIG. 8B, according to embodiments, a first state 811 of an electronic device means a state in which at least a part of a display is extracted from the housing. A first input 812 refers to a hovering input identified in the first state. A first object 813 refers to an object displayed on the display by a processor 120 to indicate an input point of the hovering input. A second state 815 of the electronic device refers to a state in which at least a part of the display is inserted into the housing. A second input 816 refers to a hovering input maintained in the second state. A second object 817 refers to an object displayed on the display by the processor 120 to indicate the input point of the hovering input. A state of the electronic device may be changed from the first state 811 of the electronic device to the second state 815 of the electronic device according to an operation 814. The operation 814 refers to an operation in which the part of the display extracted from the housing of the electronic device is inserted into the housing.

According to embodiments, before the operation 814, in case that the hovering input 812 is identified, the processor 120 may display the first object 813. The first object 813 may be displayed at a position of the input point of the hovering input in the display region of the display in the first state 811. After the operation 814, in case that the second input 816 is maintained, the processor 120 may display the object corresponding to the input point of the hovering input based on a size of the display region of the display. The processor 120 may perform coordinate conversion in accordance with the operation 814. The second object 817 may be displayed at a position in accordance with a converted coordinate in the display region of the display in the second state 815.

According to an embodiment, the processor 120 may perform coordinate conversion based on a constant position ratio. For example, in the first state 811, a ratio between a total length of the display region and a length from bottom of the display region to the first object 813 may be equal to a ratio between the total length of the display region and a length from the bottom of the display region to the second object 817 in the electronic device in the second state 815. However, in the first state 811, the length from the bottom of the display region to the first object 813 may be different from the length from the bottom of the display region to the second object 817 in the electronic device in the second state 815. For example, as the display region of the display is reduced, the coordinate of the object may vary.

Although FIG. 8B illustrates an example of displaying an object based on a constant position ratio, embodiments of the present disclosure may not be limited thereto. According to an embodiment, the processor 120 may perform coordinate conversion based on a UI screen policy in accordance with reduction of the display region and perform object display based on the converted coordinate. In addition, according to an embodiment, the processor 120 may perform coordinate conversion based on a reducing display region size and perform object display based on the converted coordinate. According to an embodiment, the processor 120 may perform coordinate conversion based on a coordinate of an identified touch input and perform object display based on the converted coordinate.

Although a circle is illustrated as an object corresponding to an input point of a hovering input in FIG. 8B, embodiments of the present disclosure are not limited thereto. The object corresponding to the input point of the hovering input may be another planar figure or a stereoscopic figure. For example, the object may be a colored circle with a filled interior. For example, the object may be a colored polygon with a filled interior. For example, the object may be a achromatic circle with a filled interior. For example, the object may be a achromatic polygon with a filled interior. For example, the object may be a colored circle with an empty interior. For example, the object may be a colored polygon with an empty interior. For example, the object may be a achromatic circle with an empty interior. For example, the object may be a achromatic polygon with an empty interior. For example, the object may be an atypical figure with a filled interior. For example, the object may be an atypical figure with an empty interior.

In FIG. 8B, the object corresponding to the input point of the hovering input is illustrated to maintain a constant shape regardless of the reduction of the display region of the display, but embodiments of the present disclosure are not limited thereto. A shape of the object corresponding to the input point of the hovering input may change according to the reduction of the display region of the display. For example, the object corresponding to a contact point of the touch input may be changed from a filled circle to an empty circle according to the enlargement of the display region of the display. For example, darkness of the object corresponding to the input point of the touch hovering input may become darker according to the reduction of the display region of the display. For example, the darkness of the object corresponding to the contact point of the touch input may become lighter according to the enlargement of the display region of the display. For example, the at least one processor may display a movement path of the object corresponding to the input point of the hovering input on the display.

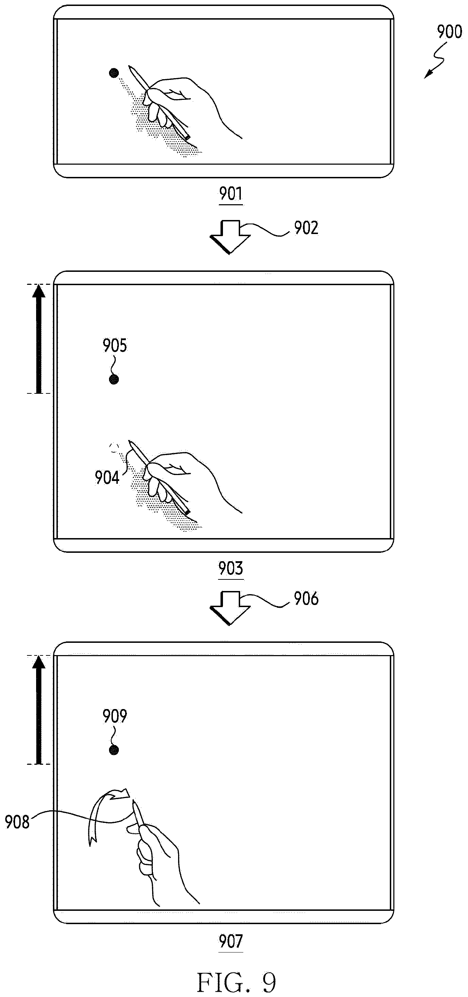

FIG. 9 illustrates an example of displaying an object based on a hovering input that is maintained even in a case that changing of a display region of a display is not yet completed and the hovering input is released, according to embodiments.

Referring to FIG. 9, according to embodiments, a first state 901 of an electronic device means a state in which at least a part of the display is inserted into a housing. A second state 903 of the electronic device means a state in which the display is at least partially extracted from the housing. A first operation 902 refers to an operation in which the part of the display inserted into the housing of the electronic device is extracted out of the housing of the electronic device. A first input 904 refers to a hovering input maintained in the second state. A first object 905 refers to an object displayed on the display by a processor 120 to indicate an input point of the hovering input. A third state 907 of the electronic device means a state in which the display is at least partially extracted from the housing. Hovering release 908 means release of the maintained hovering input. A second object 909 refers to an object display maintained regardless of the release of the hovering input. A second operation 906 refers to an operation in which the maintained hovering input is released.

A state of the electronic device may be changed from the first state 901 of the electronic device to the second state 903 of the electronic device according to the first operation 902. The state of the electronic device may be changed from the second state 903 of the electronic device to the third state 907 of the electronic device according to the second operation 906.

According to embodiments, the processor 120 may continue to display an object corresponding to the input point of the hovering input even in a case where the hovering input is identified, the display region of the display is enlarged, and the hovering input is released. For example, after the first operation 902, the state of the electronic device may be changed from the first state 901 of the electronic device to the second state 903 of the electronic device. After the first operation 902, the processor 120 may display the first object 905. For example, the state of the electronic device may be changed from the second state 903 of the electronic device to the third state 907 of the electronic device according to the second operation 906.

According to an embodiment, after the second operation 906, the processor 120 may maintain a display of the second object 909 for a certain period of time. While the display region is changed (i.e., while the display is extracted from the housing), the processor 120 may maintain the display of the second object 909 for the certain period of time.

In FIG. 9, the processor 120 is illustrated as maintaining the display of the second object 909 in a case where a new touch input is not detected or changing the display region of the display is not completed even when the hovering input is released. However, the embodiments of the present disclosure are not limited thereto. According to an embodiment, in case that the hovering input is released, the processor 120 may simply remove the object display. According to an embodiment, in case that the hovering input is released, the processor 120 may remove the object after a predetermined time interval. According to an embodiment, in case that the hovering input is released, the processor 120 may remove the object by fading the object. According to an embodiment, in case that the hovering input is released, the processor 120 may remove the object after making the object blink. According to an embodiment, in case that the hovering input is released, the processor 120 may remove the object after changing the color of the object.

FIG. 10A illustrates an operation flow of an electronic device for displaying an object corresponding to an input point of a hovering input based on changing a display region of a display, according to embodiments. The operation of the electronic device may be performed by a processor 120 of FIG. 1.

Referring to FIG. 10A, in a first operation 1001, the processor 120 may identify the hovering input. For example, the hovering input may be performed as a pen is positioned within a certain distance from the display. Alternatively, for example, the hovering input may be performed as a part of a human body (e.g., hand, finger) is positioned within a certain distance from the display.

In a second operation 1002, the processor 120 may change the display region of the display. The processor 120 may change the display region of the display. When the displayable region in the display increases or decreases, the processor 120 may change the display region in accordance with the displayable region.

According to an embodiment, the processor 120 may reduce the display region of the display. The processor 120 may change the display region of the display as at least a part of the display is inserted into a housing. For example, as the display is manually inserted into the housing through a hinge, the processor 120 may change the display region of the display. For example, as the display is manually inserted into the housing through a spring, the processor 120 may change the display region of the display. For example, as the display is inserted into the housing with a foldable method, the processor 120 may change the display region of the display. For example, as the display is automatically inserted into the housing through a motor, the processor 120 may change the display region of the display.

According to an embodiment, the processor 120 may increase the display region of the display. The processor 120 may change the display region of the display as the display is at least partially extracted from the housing. For example, as the display is manually extracted from the housing through the hinge, the processor 120 may change the display region of the display. For example, as the display is extracted from the housing with a foldable method, the processor 120 may change the display region of the display. For example, as the display is manually extracted from the housing through the spring, the processor 120 may change the display region of the display. For example, as the display is automatically extracted from the housing through the motor, the processor 120 may change the display region of the display.

In a third operation 1003, the processor 120 may display an object corresponding to an input point of the hovering input based on a size of the display region of the display. For example, in case that the hovering input is identified and the display region of the display is changed, the processor 120 may obtain first coordinate information of the input point before changing the display region of the display, obtain second coordinate information based on the size of the display region of the display, and display the object corresponding to the input point in the second coordinate. For example, in case that the hovering input is identified after changing the display region of the display, the processor 120 may obtain the first coordinate information of the input point at the time point of occurrence of the hovering input, obtain second coordinate information based on the size of the display region of the display, and display the object corresponding to the input point in the second coordinate.

A shape of the object corresponding to the input point of the hovering input may change according to enlargement of the display region of the display. For example, the object corresponding to the input point of the hovering input may be changed from a filled circle to an empty circle according to the enlargement of the display region of the display. For example, darkness of the object corresponding to the input point of the hovering input may become darker according to the enlargement of the display region of the display. For example, the darkness of the object corresponding to a contact point of the touch input may become lighter according to the enlargement of the display region of the display. The at least one processor may display a movement path of the object corresponding to the input point of the hovering input on the display.

In a fourth operation 1004, the processor 120 may identify whether a new touch input is detected during changing the display region of the display. The processor 120 may perform a fifth operation 1005 in a case where the new touch input is detected. The processor 120 may perform a sixth operation 1006 in a case where the new touch input is not detected.

In the sixth operation 1006, the processor 120 may identify whether changing the size of the display region of the display is completed. The processor 120 may perform a seventh operation 1007 in a case where changing the size of the display region of the display is completed. The processor 120 may perform the sixth operation 1006 in a case where changing the size of the display region of the display is not completed.

The processor 120 may control the display so that the object corresponding to the input point of the hovering input is not displayed on the display when the new touch input is not detected and changing the display region of the display is completed. For example, the processor 120 may remove a display of the object corresponding to the input point of the hovering input. The processor 120 may simply remove the display of the object corresponding to the input point of the hovering input. The processor 120 may gradually disappear (e.g., fade-out) the display of the object corresponding to the input point of the hovering input. For convenience of the user, a method of removing the display of the object corresponding to the input point of the hovering input may be different from a method of removing a display of an object corresponding to an input point of the touch input. The processor 120 may drive a timer in case that changing the display region of the display is completed, and when the timer expires, control the display so that the object corresponding to the input point of the hovering input is not displayed.

The processor 120 may maintain the display of the object corresponding to the input point of the hovering input when the new touch input is not detected and changing the display region of the display continues, regardless of whether the hovering input is released.

In the fifth operation 1005, in case that the new touch input is detected, the processor 120 may control the display so that the object corresponding to the input point of the hovering input is not displayed on the display. The processor 120 may proceed according to the flow of a third operation 603 at the time of the touch input.

A first scheme in which the object corresponding to the input point of the hovering input is removed as the new touch input is not detected and changing the display region of the display is completed and a second scheme in which the object corresponding to the input point of the hovering input is removed by detecting the new touch input may be different. The first scheme and the second scheme may be different for the convenience of the user.

For example, in case that the new touch input is not detected in the display and changing the display region of the display is completed, the object corresponding to the input point of the hovering input may be removed in a fade scheme. And in case that the new touch input is detected, the object corresponding to the input point of the hovering input may be removed by a simple removal scheme. In FIG. 10A, the second operation 1002 is described as being performed after the first operation 1001, but embodiments of the present disclosure are not limited thereto. The first operation 1001 may be performed after the second operation 1002.

In FIG. 10A, the processor is illustrated to maintain the display of the object corresponding to the input point of the hovering input in case that a new touch input is not detected or changing the display region of the display is not completed even when the hovering input is released. However, the embodiments of the present disclosure are not limited thereto. According to an embodiment, in case that the hovering input is released, the processor 120 may simply remove the display of the object corresponding to the input point of the hovering input. According to an embodiment, in case that the hovering input is released, the processor 120 may remove the object after a predetermined time interval. According to an embodiment, in case that the hovering input is released, the processor 120 may remove the object by fading the object. According to an embodiment, in case that the hovering input is released, the processor 120 may remove the object after making the object blink. According to an embodiment, in case that the hovering input is released, the processor 120 may remove the object after changing the color of the object.

Although FIG. 10A illustrates that the display is controlled so that the object is not displayed on the display after changing the display region of the display is completed, embodiments of the present disclosure may not be limited thereto. After changing the display region of the display is completed, whether to display the object may be determined according to an object display policy. According to embodiments, the object display policy may be determined based on a UI of a running application. According to embodiments, the display policy may be determined based on a region of the display in which the hovering input is identified. For example, in the hovering policy, in case that a video is displayed on the display, the hovering input may be maintained when the input point of the hovering input is a menu region, and the hovering input may be released when the input point of the hovering input is any other region.

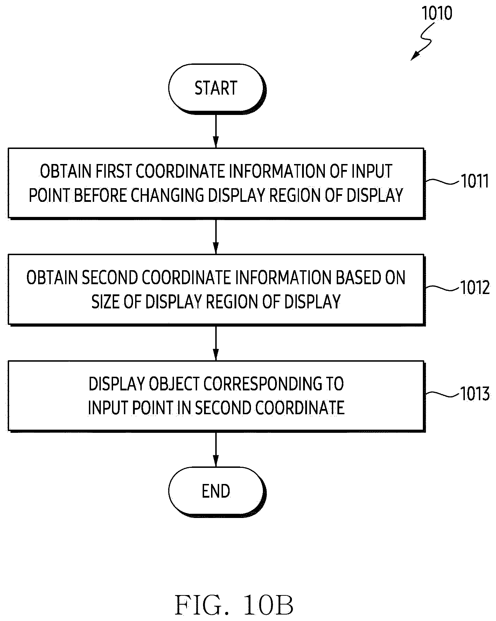

FIG. 10B illustrates an operation flow of an electronic device for displaying an object corresponding to an input point of a hovering input, in case that changing of a display region of a display occurs before identification of the hovering input, according to embodiments. In FIG. 10B, operations of an electronic device 101 for displaying the object corresponding to the input point of the hovering input are described in response to the hovering input and changing the display region. The operations of FIG. 10B may correspond to a third operation 1003 of an electronic device of FIG. 10A.

Referring to FIG. 10B, in a first operation 1011, the processor 120 may obtain first coordinate information corresponding to the input point of the hovering input before changing the display region of the display. For example, a first coordinate in a screen of the electronic device before enlarging the display region of the display may correspond to a second coordinate in the screen of the electronic device after enlarging the display region. The first coordinate may correspond to the second coordinate based on a screen policy.

In a second operation 1012, the processor 120 may obtain second coordinate information based on a size of the display region of the display. For example, the first coordinate in the screen of the electronic device before enlarging the display region of the display may correspond to the second coordinate in the screen of the electronic device after enlarging the display region of the display. The first coordinate may correspond to the second coordinate based on the screen policy.

In a third operation 1013, the processor 120 may display the object corresponding to the input point of the hovering input. For example, the first coordinate in the screen of the electronic device before enlarging the display region of the display may correspond to the second coordinate in the screen of the electronic device after enlarging the display region. The first coordinate may correspond to the second coordinate based on the screen policy.

As described above, an electronic device according to an embodiment may comprise a housing, memory configured to store instructions, a display insertable into the housing or extractable out from the housing, and at least one processor, wherein the at least one processor, when the instructions are executed, may be configured to identify a touch input on a display region of the display exposed outside the housing, and in case that the display region changes while the touch input is maintained on the display region, display an object corresponding to a contact point of the touch input based on a size of the changed display region.

For example, the at least one processor may be, to display the object corresponding to the contact point, configured to obtain first coordinate information of the contact point before changing the display region of the display, obtain second coordinate information based on the size of the display region, and display the object corresponding to the contact point based on the second coordinate information.

For example, the at least one processor may control the display so that the object corresponding to the contact point is not displayed in case that the touch input is released.

For example, the at least one processor may control the display so that the object corresponding to the contact point is not displayed in case that changing of the size of the display region is completed and the touch input is released.

For example, the at least one processor may be configured to determine that a plurality of coordinates in accordance with changing of the size of the display region of the display corresponding to the contact point correspond to the contact point of the touch input instead of a contact point of a drag input.

For example, the at least one processor may display the object corresponding to the contact point of the touch input at a position in accordance with a screen policy of an application displayed in the display region, wherein the screen policy may indicate a configuration change of a user interface performed by the application when the display is inserted into the housing or extracted from the housing.

For example, the at least one processor may display a user interface (UI) for a virtual keyboard in one region of the display region, and display an object corresponding to a contact point of another touch input in case that the display region is changed while the other touch input is maintained on the one region.

As described above, an electronic device according to an embodiment may comprise a housing, memory configured to store instructions, a display insertable into the housing or extractable out from the housing, and at least one processor, wherein the at least one processor, when the instructions are executed, may be configured to identify a hovering input on a display region of the display exposed outside the housing, and in case that a size of the display region changes, display an object corresponding to an input point of the hovering input based on the size of the display region.

For example, the at least one processor may be, to display the object corresponding to the input point of the hovering input, configured to obtain first coordinate information of the input point before changing the display region of the display, obtain second coordinate information based on the size of the display region, and display the object corresponding to the input point based on the second coordinate information.

For example, the at least one processor may control the display so that the object corresponding to the input point is not displayed in case that the touch input is detected.

For example, the at least one processor may control the display so that the object corresponding to the input point is not displayed in case that changing the display region of the display is completed.

For example, the at least one processor may drive a timer in case that changing the display region of the display is completed, and when the timer expires, control the display so that the object is not displayed.

For example, the at least one processor may display the object corresponding to the input point of the hovering input at a position in accordance with a screen policy of an application displayed in the display region, wherein the screen policy may indicate a configuration change of a user interface performed by the application when the display is inserted into the housing or extracted from the housing.

For example, the at least one processor may be configured to display a user interface (UI) for a virtual keyboard in one region of the display region, identify another hovering input to the UI on the one region, and display an object corresponding to an input point of the other hovering input in case that the display region is changed.

As described above, a method of an electronic device according to an embodiment may comprise identifying a touch input on a display region of a display exposed outside a housing, and in case that the display region changes while the touch input is maintained on the display region, displaying an object corresponding to a contact point of the touch input based on a size of the changed display region.

For example, the displaying of the object corresponding to the contact point of the touch input may comprise obtaining first coordinate information of the contact point before changing the display region of the display, obtaining second coordinate information based on the size of the display region, and displaying the object corresponding to the contact point based on the second coordinate information.

For example, the method of the electronic device according to an embodiment may further comprise controlling the display so that the object corresponding to the contact point is not displayed in case that the touch input is released.

For example, the method of the electronic device according to an embodiment may further comprise controlling the display so that the object corresponding to the contact point is not displayed in case that changing of a size of the display region is completed and the touch input is released.

For example, the method of the electronic device according to an embodiment may further comprise determining that a plurality of coordinates in accordance with changing of the size of the display region of the display corresponding to the contact point correspond to the contact point of the touch input instead of a contact point of a drag input.

For example, the at least one processor may display the object corresponding to the contact point of the touch input at a position in accordance with a screen policy of an application displayed in the display region, wherein the screen policy may indicate a configuration change of a user interface performed by the application when the display is inserted into the housing or extracted from the housing.

An electronic device comprising a rollable display may change the display region of the display as a part of the display is inserted into the housing or extracted from the housing. When changing the display region of the display, the electronic device may control the display so that a touch input or hovering input is not inputted differently from the user's intension by performing coordinate conversion in accordance with changing the display region.

As described above, in a computer readable storage medium storing one or more programs according to an embodiment, the one or more programs may comprise instructions that, when executed by a processor of an electronic device, cause the electronic device to display an object corresponding to a contact point of the touch input at a position in accordance with a screen policy of an application displayed in the display region. The one or more programs may comprise instructions that cause the electronic device to indicate a configuration change of a user interface performed by the application when the display is inserted into the housing or extracted from the housing.

The one or more programs according to an embodiment may comprise the instructions that, when executed by the processor of the electronic device, to display the object corresponding to the contact point, cause the electronic device to obtain first coordinate information of the contact point before changing a display region of the display. The one or more programs may comprise the instructions that, when executed by the processor of the electronic device, to display the object corresponding to the contact point, cause the electronic device to obtain second coordinate information based on a size of the display region. The one or more programs may comprise the instructions that, when executed by the processor of the electronic device, to display the object corresponding to the contact point, cause the electronic device to display the object corresponding to the contact point based on the second coordinate information.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a housing;
memory configured to store instructions;
a display insertable into the housing or extractable out from the housing; and
at least one processor,
wherein the at least one processor, when the instructions are executed, is configured to:
identify a touch input on a display region of the display exposed outside the housing, and
in case that the display region changes while the touch input is maintained on the display region, display an object corresponding to a contact point of the touch input based on a size of the changed display region.

2. The electronic device of claim 1, wherein the at least one processor is, to display the object corresponding to the contact point, configured to:
obtain first coordinate information of the contact point before changing the display region of the display,
obtain second coordinate information based on the size of the display region, and
display the object corresponding to the contact point based on the second coordinate information.

3. The electronic device of claim 1, wherein the at least one processor is further configured to control the display so that the object corresponding to the contact point is not displayed in case that the touch input is released.

4. The electronic device of claim 1, wherein the at least one processor is further configured to control the display so that the object corresponding to the contact point is not displayed in case that changing of the size of the display region is completed and the touch input is released.

5. The electronic device of claim 1, wherein the at least one processor is configured to determine that a plurality of coordinates in accordance with changing of a size of the display region of the display corresponding to the contact point correspond to the contact point of the touch input instead of a contact point of a drag input.

6. The electronic device of claim 1, wherein the at least one processor is configured to:
display the object corresponding to the contact point of the touch input at a position in accordance with a screen policy of an application displayed in the display region,
wherein the screen policy indicates a configuration change of a user interface performed by the application when the display is inserted into the housing or extracted from the housing.

7. The electronic device of claim 1,
wherein the at least one processor is configured to:
display a user interface (UI) for a virtual keyboard in one region of the display region, and
display an object corresponding to a contact point of another touch input in case that the display region is changed while the another touch input is maintained on the one region.

8. A method performed by an electronic device, the method comprising:
identifying a touch input on a display region of a display exposed outside a housing; and
in case that the display region changes while the touch input is maintained on the display region, displaying an object corresponding to a contact point of the touch input based on a size of the changed display region.

9. The method of claim 8, wherein the displaying of the object corresponding to the contact point of the touch input, comprises:
obtaining first coordinate information of the contact point before changing the display region of the display,
obtaining second coordinate information based on the size of the display region, and
displaying the object corresponding to the contact point based on the second coordinate information.

10. The method of claim 8, further comprising:
controlling the display so that the object corresponding to the contact point is not displayed in case that the touch input is released.

11. The method of claim 8, further comprising:
controlling the display so that the object corresponding to the contact point is not displayed in case that changing of a size of the display region is completed and the touch input is released..

12. The method of claim 8, further comprising:
determining that a plurality of coordinates in accordance with changing of a size of the display region of the display corresponding to the contact point correspond to the contact point of the touch input instead of the contact point of the drag input.

13. The method of claim 8, comprising:
displaying an object corresponding to the contact point of the touch input at a position in accordance with a screen policy of an application displayed in the display region,
wherein the screen policy indicates a configuration change of a user interface performed by the application when the display is inserted into the housing or extracted from the housing.

14. A computer readable storage medium storing one or more programs, the one or more program comprising instructions that, when executed by a processor of an electronic device, cause the electronic device to display an object corresponding to a contact point of the touch input at a position in accordance with a screen policy of an application displayed in the display region,
wherein the screen policy indicates a configuration change of a user interface performed by the application when the display is inserted into the housing or extracted from the housing.

15. The computer readable storage medium of claim 14,
wherein the computer readable storage medium comprises the instructions that, when executed by a processor of the electronic device to display the object corresponding to the contact point, cause the electronic device to:
obtain first coordinate information of the contact point before changing a display region of the display,
obtain second coordinate information based on a size of the display region, and
display the object corresponding to the contact point based on the second coordinate information.
